# EUROPÄISCHE PATENTANMELDUNG

(11) **EP 2 767 461 A1**
(43) Veröffentlichungstag der Anmeldung: **20.08.2014**
(21) Anmeldenummer: 13155458.6
(22) Anmeldetag: 15.02.2013
(51) Int. Cl.: B62D 65/18, B66F 7/12, B66F 7/28

(54) **Transportvorrichtung für eine Fahrzeugmontageeinrichtung**

(71) Anmelder: Siemens Aktiengesellschaft, 80333 München (DE)
(72) Erfinder: Aßmann, Roland Heinz, 63654 Büdingen (DE)

(57) **Zusammenfassung**

Die Erfindung betrifft eine Transportvorrichtung für eine Fahrzeugmontageeinrichtung mit einem auf einer Transportebene verfahrbaren Grundelement. Außerdem sind zumindest zwei mit dem Grundelement verbundenen Sockelelementen vorgesehen, die jeweils um eine zur Transportebene senkrechte Drehachse drehbar sind. Mit einer Hubvorrichtung ist zumindest jeweils ein Trägerelement zur Fahrzeugkarosserieaufnahme verbunden, das exzentrisch zur Drehachse des Sockelelements bewegbar ist. Das Grundelement ist in Längsrichtung teilbar und umfaßt zwei miteinander lösbar verbindbare Grundmodule, mit denen jeweils ein Sockelelement verbunden ist. Zwischen einem Trägerelement und einer Hubvorrichtung ist jeweils ein Drehgelenk angeordnet ist, durch das ein Trägerelement an einer jeweiligen Hubvorrichtung drehbar gelagert ist.

## Beschreibung

Die Erfindung betrifft eine Transportvorrichtung für Fahrzeugmontageeinrichtungen entsprechend dem Oberbegriff des Anspruchs 1. Eine solche Transportvorrichtung ist aus EP 2 298 631 B1 bekannt. Fahrzeugmontageeinrichtungen erstrecken sich beispielsweise entlang Produktionsstraßen.

Zur Optimierung von Fertigungsläufen werden in Fahrzeugmontageeinrichtungen seit Jahrzehnten Fließbänder verwendet. Dabei werden zu fertigende Fahrzeuge, insbesondere Automobile, von einer Arbeitsstation zur nächsten transportiert. An jeder Arbeitsstation werden üblicherweise nur wenige, relativ einfache Arbeitsschritte durchgeführt. Zum Fahrzeugtransport in Fahrzeugmontageeinrichtungen verwendete Fördersysteme müssen vielfältige Anforderungen erfüllen. Zum einen sind die zu transportierenden Fahrzeuge als Werkstücke verhältnismäßig schwer. Andererseits müssen die Fahrzeuge zur Bearbeitung von möglichst vielen Seiten gut zugänglich sein, insbesondere damit Arbeitsschritte ergonomisch ausgeführt werden können.

Üblicherweise werden noch nicht vollständig montierte Fahrzeuge mittels Hängeförderer in einer Fahrzeugmontageeinrichtung transportiert. Stark verbreitet sind Elektrohängebahnen. Aus DE 31 46 807 A1 ist ein Fördersystem bekannt, bei der eine Kraftfahrzeugkarosserie zum Transport an Trägern aufgehängt ist. Arbeiten wie Leitungsverlegung oder Einbauten im Motorraum erfolgen häufig, wenn die Kraftfahrzeugkarosserie mittels eines Hängeförderers transportiert wird. Vielfach wird ein zu montierendes Fahrzeug nach einer Bearbeitung als hängendes Werkstück an eine Plattformanlage übergeben oder von einer Plattformanlage übernommen, auf der das Fahrzeug transportiert wird. Dies geschieht üblicherweise vor bzw. nach Vereinigung von Antriebsstrang und Karosserie im Rahmen der "Hochzeit". Wenn das zu montierende Fahrzeug auf der Plattformanlage transportiert wird, ist das Fahrzeug für Arbeiten wie Scheibenkleben, Türeinbau, Cockpiteinbau oder Sitzeinbau gut zugänglich.

In DE 10 2005 062 691 A1 ist ein Fördersystem einer Montageeinrichtung für Kraftfahrzeuge beschrieben, bei der für jedes Kraftfahrzeug eine fahrbare Plattform vorgesehen ist, die eine Hubeinrichtung für ein Kraftfahrzeug umfaßt. Die Hubeinrichtung ist in einer Vertikalprojektion neben dem Kraftfahrzeug angeordnet. Für im wesentlichen jedes zu fertigende Kraftfahrzeug ist eine fahrbare Plattform vorgesehen. Das Kraftfahrzeug verbleibt während des gesamten Fertigungsablaufs auf der Plattform. Auf diese Weise kann ein aufwendiges Umsetzen des Kraftfahrzeugs von einem Hängeförderer auf eine Plattformanlage entfallen, wodurch der Fertigungsablauf weniger unterbrechungsgefährdet ist.

Aus US 2003/000413 A1 und JP 06 156662 A ist jeweils ein Elektrohängebahnsystem für eine Fahrzeugmontageeinrichtung bekannt, bei dem ein durch eine Hängebahn geführter Trägerrahmen mit mehreren Aufnahmeelementen verbunden ist, die jeweils um eine zur Transportrichtung senkrechte Drehachse drehbar sind. Mit den Aufnahmeelementen ist jeweils ein Trägerelement zur Fahrzeugkarosserieaufnahme verbunden. Jedes Trägerelement ist dabei exzentrisch zur Drehachse des jeweiligen Aufnahmeelements bewegbar.

Der vorliegenden Erfindung liegt die Aufgabe zugrunde, eine Transportvorrichtung für eine Fahrzeugmontageeinrichtung zu schaffen, die einerseits ergonomische Arbeitsabläufe in einer Fahrzeugmontageeinrichtung und andererseits eine Fahrzeugmontage mittels unterhalb eines Fahrzeugs oder einer Karosserie angeordneter stationärer Bearbeitungseinrichtungen ermöglicht.

Diese Aufgabe wird erfindungsgemäß durch eine Transportvorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Transportvorrichtung für eine Fahrzeugmontageeinrichtung umfaßt ein auf einer Transportebene verfahrbares Grundelement. Dabei ist das auf der Transportebene verfahrbare Grundelement ein ferngesteuert lenkbares oder schienengeführtes Fahrzeug. Mit dem Grundelement sind zumindest zwei Sockelelemente verbunden, die jeweils um eine zur Transportebene senkrechte Drehachse drehbar und jeweils mit einer Hubvorrichtung verbunden sind. Außerdem ist zumindest jeweils ein mit einer Hubvorrichtung verbundenes Trägerelement zur Fahrzeugkarosserieaufnahme vorgesehen, das exzentrisch zur Drehachse des Sockelelements bewegbar ist. Dabei sind die Trägerelemente mittels der Hubvorrichtungen parallel zu den Drehachsen der Sockelelemente beweglich. Die Hubvorrichtungen können jeweils einen individuell ausfahrbaren Teleskopmechanismus umfassen.

Erfindungsgemäß ist das Grundelement in Längsrichtung teilbar und umfaßt zwei miteinander lösbar verbindbare Grundmodule, mit denen jeweils ein Sockelelement verbunden ist. Die Grundmodule können beispielsweise mittels einer Steckverbindungsvorrichtung miteinander verbindbar sein. Zur Trennung der Grundmodule kann ein Querverschiebewagen oder einer Ketten-, Zahnriemen- bzw. Zahnstangenantriebsvorrichtung vorgesehen sein. Der Querverschiebewagen oder die Ketten-, Zahnriemen- bzw. Zahnstangenantriebsvorrichtung können dabei an einer Bearbeitungsstation stationär angeordnet sein. Des weiteren ist zwischen einem Trägerelement und einer Hubvorrichtung jeweils mindestens ein Drehgelenk angeordnet, durch das ein Trägerelement an einer jeweiligen Hubvorrichtung drehbar gelagert ist. Auf diese Weise kann ein Abstand zwischen einer Drehachse eines Sockelelements und einem zugeordneten Trägerelement verändert werden. Somit können die beiden Grundmodule an einer stationär auf der Transportebene angeordneten Bearbeitungseinrichtung getrennt werden, ohne daß ein durch die Trägerelemente gehaltenes Fahrzeug oder eine Karosserie ab- oder umgesetzt werden muß, um die stationäre Bearbeitungseinrichtung zu passieren. Nach Passieren der stationären Bearbeitungseinrichtung können beide Grundmodule wieder miteinander verbunden werden. Vorzugsweise sind die beiden Grundmodule in einem voneinander getrennten Zustand mittels einer Ketten-, Zahnriemen- bzw. Zahnstangenantriebsvorrichtung miteinander in Fahrtrichtung synchronisiert.

Dadurch daß Hubvorrichtungen exzentrisch zur Drehachse des jeweiligen Sockelelements bewegbar sind, können die Hubvorrichtungen auf verschiedene Weise unter einem Fahrzeugunterboden zur Lastabstützung positioniert werden. In einer ersten Stellung können die Hubvorrichtungen beispielsweise in Fahrzeuglängsrichtung gesehen in einem Außenbereich des Fahrzeugunterbodens positioniert werden, so daß Antriebsstrang und Karosserie leicht miteinander verbunden werden können. Außerdem sind in dieser Stellung im wesentlichen alle Bereiche des Fahrzeugunterbodens gut zugänglich, in denen beispielsweise Leitungen zu verlegen sind. Dementsprechend können die Hubvorrichtungen beispielsweise in einer zweiten Stellung in einem Innenbereich positioniert werden, so daß insbesondere in tiefen Positionen der Trägerelemente Vorder- und Hinterseite sowie Außenseite und Karosserieoberseite frei zugänglich sind.

Insgesamt ergibt sich durch diese Stellungen und weitere mögliche Stellungen der Hubvorrichtungen eine nahezu uneingeschränkte Zugänglichkeit zu einer Kraftfahrzeugkarosserie. Dies ermöglicht wiederum eine Realisierung eines durchgängigen Fördertechnikkonzepts, so daß aufwendige Umsetzvorgänge eines Kraftfahrzeugs von einem Hängeförderer auf eine Plattformanlage entfallen können. Darüber hinaus sind in einer Fahrzeugmontagehalle keine teuren, platzbeanspruchenden Trägerkonstruktionen für Hängeförderer erforderlich. Zudem erfordern derartige Trägerkonstruktionen statische Voraussetzungen, die nicht jede Fahrzeugmontagehalle erfüllt.

Vorzugsweise sind die Sockelelemente am Grundelement gelagert und weisen einen kreisförmigen Querschnitt auf. Dabei verlaufen die Drehachsen der Sockelelemente jeweils mittig durch die Sockelelemente, und die Hubvorrichtungen sind jeweils außermittig auf einem Sockelelement befestigt. Entsprechend einer weiteren Ausgestaltung der erfindungsgemäßen Transportvorrichtung sind die Sockelelemente in Längs- bzw. Querrichtung des Grundelements auf dem Grundelement verschiebbar. Damit kann ein durch die Trägerelemente gehaltenes Fahrzeug oder eine Karosserie auf einfache Weise in eine gewünschte Bearbeitungsposition gekippt bzw. bewegt werden. Um die erfindungsgemäße Transportvorrichtung für eine Vielzahl unterschiedlicher Fahrzeugtypen verwenden zu können, sind die Trägerelemente vorzugsweise austauschbar gestaltet. Darüber hinaus können die Trägerelemente an eine um eine Fahrzeuglängsachse gekippte Karosserie anpaßbar ausgestaltet sein.

Die vorliegende Erfindung wird nachstehend an einem Ausführungsbeispiel anhand der Zeichnung näher erläutert. Es zeigt
- Figur 1: eine Transportvorrichtung für eine Fahrzeugmontage in perspektivischer Darstellung,
- Figur 2: die in Figur 1 dargestellte Transportvorrichtung aus Fahrzeugfrontansicht,
- Figur 3: die in Figur 1 dargestellte Transportvorrichtung mit einem an einer stationären Bearbeitungseinrichtung geteilten Grundelement,
- Figur 4: die Transportvorrichtung gemäß Figur 3 in perspektivischer Darstellung mit einem an einer stationären Bearbeitungseinrichtung geteilt vorbeigeführten Grundelement,
- Figur 5: die in Figur 1 dargestellte Transportvorrichtung mit geänderter Trägerelementstellung,
- Figur 6: die in Figur 5 dargestellte Transportvorrichtung aus Fahrzeugfrontansicht,

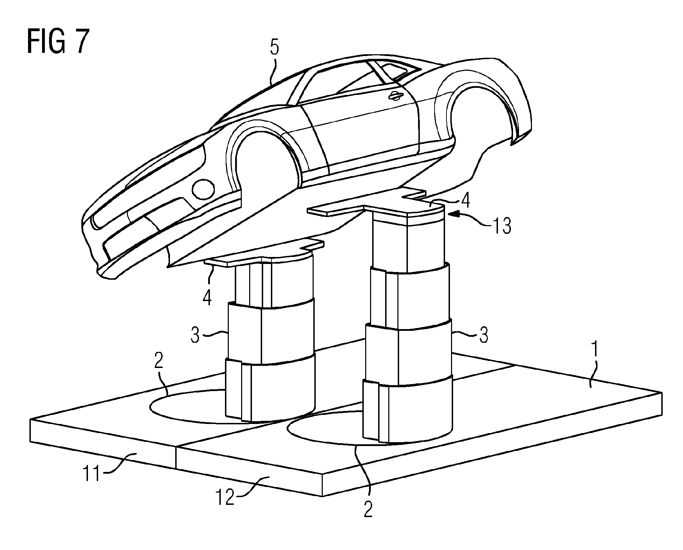

- Figur 7: die in Figur 1 dargestellte Transportvorrichtung mit geänderter Trägerelementstellung und geänderter Hubvorrichtungseinstellung.

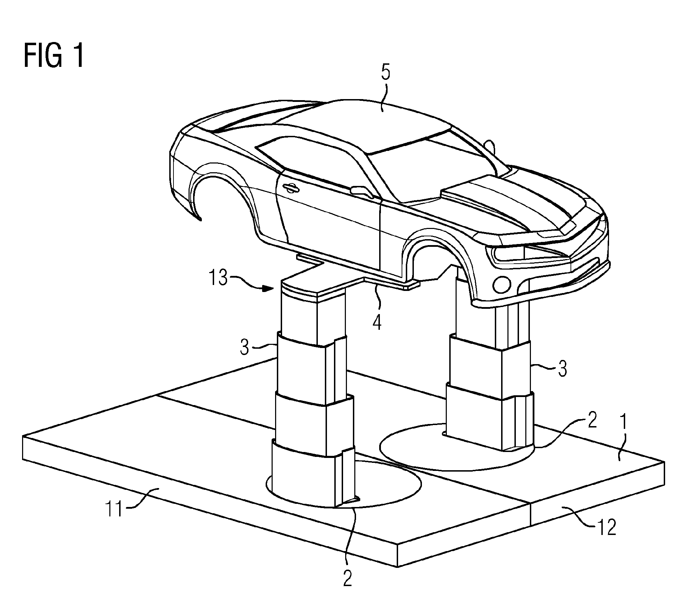

Die in Figur 1 dargestellte Transportvorrichtung umfaßt ein auf einer Transportebene verfahrbares Grundelement 1. Das Grundelement 1 ist ein ferngesteuert lenkbares Fahrzeug oder ein schiengeführtes Fahrzeug. Die Transportebene erstreckt sich im vorliegenden Ausführungsbeispiel parallel zum Grundelement 1. Am Grundelement 1 sind zwei Sockelelemente 2 gelagert, die jeweils um eine zur Transportebene senkrechte Drehachse drehbar sind. Darüber hinaus können die Sockelelemente 2 in Längs- bzw. Querrichtung des Grundelements 1 auf dem Grundelement 1 verschiebbar fixiert sein. Das Grundelement 1 ist in Längsrichtung teilbar und umfaßt zwei miteinander lösbar verbindbare Grundmodule 11, 12, mit denen jeweils ein Sockelelement 2 verbunden ist. Zwischen einem Trägerelement 4 zur Fahrzeugkarosserieaufnahme und einer Hubvorrichtung 3 ist jeweils mindestens ein Drehgelenk 13 angeordnet, durch das ein Trägerelement 4 an einer jeweiligen Hubvorrichtung 3 drehbar gelagert ist. Mit einem Drehgelenk 13 wird zusätzlich zu einer Drehlagerung eines Sockelelements 2 am jeweiligen Grundmodul 11, 12 ein zweites Drehlager pro Hubvorrichtung 3 bereitgestellt, das eine Veränderung eines Abstands zwischen einer Drehachse eines Sockelelements 2 und einem zugeordneten Trägerelement 4 ermöglicht. Auf diese Weise kann ein Auseinanderfahren der Grundmodule 11, 12 realisiert werden. Darüber hinaus sind die Hubvorrichtungen 3 bzw. Trägerelemente 4 vorzugsweise als Los-/Festlageranordnung ausgestaltet. Damit können potentielle Relativbewegungen zwischen beiden Grundmodulen 11, 12 ausgeglichen werden.

Die Sockelelemente 2 weisen einen kreisförmigen Querschnitt auf, und die Drehachsen der Sockelelemente 2 verlaufen im vorliegenden Ausführungsbeispiel jeweils mittig durch die Sockelelemente 2. Auf den Sockelelementen 2 ist jeweils außermittig eine Hubvorrichtung 3 befestigt, die bei Drehung des jeweiligen Sockelelements 2 eine exzentrische Kurve beschreibt. Die Hubvorrichtungen 3 umfassen jeweils einen auf einer Spiral-Hubeinheit basierenden Teleskopmechanismus und sind individuell auf unterschiedliche Höhen ausfahrbar, so daß ein Fahrzeug 5 auf der Transportvorrichtung um seine Längsachse kippbar ist. Vorzugsweise sind auch die Trägerelemente 4 an eine um eine Fahrzeuglängsachse gekippte Karosserie anpaßbar ausgestaltet.

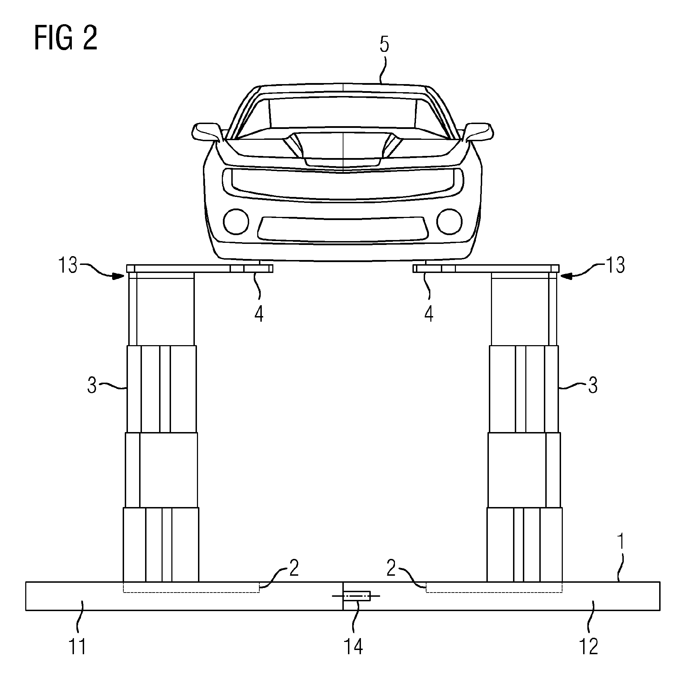

Anhand von Figur 2 ist zu erkennen, daß auf den Hubvorrichtungen 3 jeweils ein austauschbares Trägerelement 4 zur Aufnahme eines Fahrzeugs 5 befestigt ist, das exzentrisch zur Drehachse des jeweils zugeordneten Sockelelements bewegbar ist. Mittels der Hubvorrichtungen 3 sind die Trägerelemente 4 parallel zu den Drehachsen der Sockelelemente 2 beweglich. Darüber hinaus sind die beiden Grundmodule 11, 12 entsprechend Figur 2 mittels einer Steckverbindungsvorrichtung 14 miteinander verbunden. Die Steckverbindungsvorrichtung dient auch zur Übertragung von Steuerungssignalen, die von einer beiden Grundmodulen 11, 12 zugeordneten gemeinsamen Steuerungseinrichtung erzeugt werden.

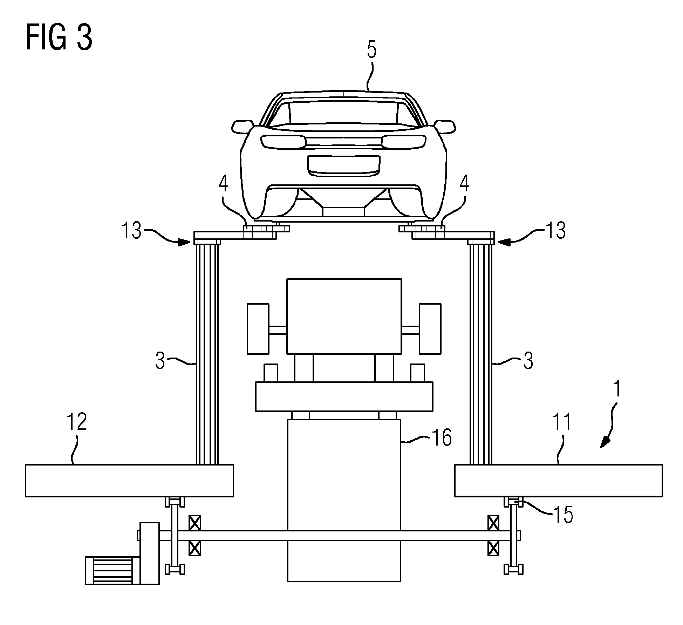

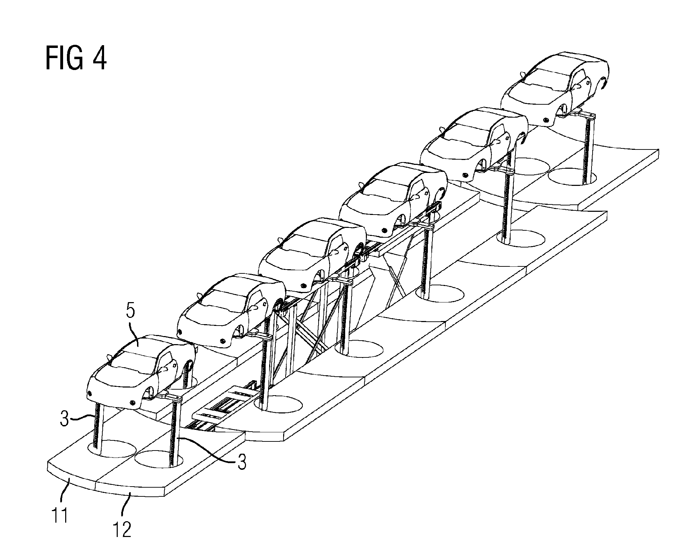

In Figur 3 und 4 ist die Transportvorrichtung mit einem an einer stationären Bearbeitungseinrichtung 16 geteilten Grundelement dargestellt, dessen Grundmodule 11, 12 voneinander getrennt sind. Dabei stellt die stationäre Bearbeitungseinrichtung 16 zunächst ein Hindernis für die Transportvorrichtung dar. An der stationären Bearbeitungseinrichtung 16 werden im vorliegenden Ausführungsbeispiel Antriebsstrang und Karosserie im Rahmen der "Hochzeit" vereinigt. Die beiden Grundmodule 11, 12 können mittels eines Querverschiebewagens oder einer Rollen-, Ketten-, Zahnriemen- bzw. Zahnstangenantriebsvorrichtung 15 voneinander getrennt werden. Dabei ist der Querverschiebewagen oder die Rollen-, Ketten-, Zahnriemen- bzw. Zahnstangenantriebsvorrichtung 15 vorzugsweise stationär an einer Bearbeitungsstation angeordnet, die im vorliegenden Ausführungsbeispiel die Bearbeitungseinrichtung 16 umfaßt.

Dadurch daß das Grundelement 1 in Längsrichtung teilbar ist und die Trägerelemente 4 an der jeweiligen Hubvorrichtung 3 drehbar gelagert sind, können die beiden Grundmodule 11, 12 die Bearbeitungseinrichtung 16 getrennt voneinander passieren werden. Insbesondere aufgrund einer drehbaren Lagerung der Trägerelemente 4 an der jeweiligen Hubvorrichtung 3 muß das Fahrzeug 5 dabei nicht ab- oder umgesetzt werden. Nach Passieren der stationären Bearbeitungseinrichtung können beide Grundmodule wieder miteinander verbunden werden. Entsprechend dem vorliegenden Ausführungsbeispiel werden die beiden Grundmodule 11, 12 in einem voneinander getrennten Zustand mittels der Rollen-, Ketten-, Zahnriemen- bzw. Zahnstangenantriebsvorrichtung 15 oder elektronisch miteinander in Bewegungsrichtung synchronisiert. Beispielsweise können die Grundmodule 11, 12 jeweils als Glieder einer kurvengängigen Kette aus Grundmodulen ausgestaltet sein. Vorzugsweise sind die Glieder der kurvengängigen Kette mittels lösbarer Kupplungselemente miteinander verbunden. Damit sind Fertigungsabläufe in einem Taktbetrieb möglich.

Vorzugsweise sind die Grundmodule 11, 12 durch eine mitgeführte Antriebseinheit bzw. durch zumindest eine stationär angeordnete Antriebseinheit verriegelbar. In entsprechender Weise können die Trägerelemente 4 durch eine mitgeführte Antriebseinheit bzw. durch zumindest eine stationär angeordnete Antriebseinheit geschwenkt werden. Dabei kann es sich um dieselben Antriebseinheiten handeln. Darüber hinaus können die Grundmodule 11, 12 mittels stationär angeordneter Separierungselemente, insbesondere Kulissen, getrennt werden. Entsprechend einer bevorzugten Ausführungsform umfassen die Hubvorrichtungen 3 eine mitgeführte Hubantriebseinheit bzw. stationäre Hubelemente, insbesondere Kulissen. Zusätzlich können die Hubvorrichtungen auch zumindest eine durch stationäre Sicherungselemente, insbesondere Kulissen, gebildete Absturzsicherung umfassen.

In einer ersten Stellung entsprechend den Figuren 1 und 2 sind die Trägerelemente 4 durch Drehung der Sockelelemente 2 in Fahrzeuglängsrichtung gesehen in einem Außenbereich am Fahrzeugunterboden positioniert. Die Hubvorrichtungen 3 weisen in dieser Stellung einen maximalen Abstand zueinander auf. Des weiteren sind die Hubvorrichtungen 3 in der Stellung entsprechend den Figuren 1 und 2 auf maximale Höhe ausgefahren, so daß beispielsweise Antriebsstrang und Karosserie eines Fahrzeugs 5 leicht miteinander verbunden werden können. Außerdem ist der Fahrzeugunterboden bei Überkopfmontagearbeiten für Montagearbeiter gut zugänglich. Zu Überkopfmontagearbeiten zählt beispielsweise eine Leitungsverlegung.

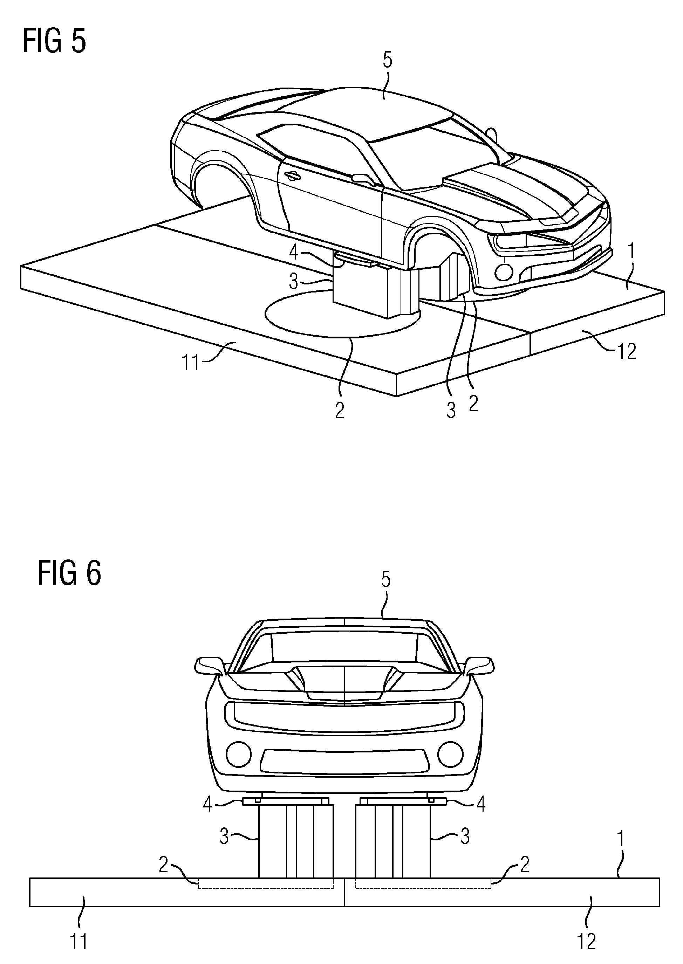

Entsprechend einer zweiten Stellung, die in den Figuren 4 und 5 aus unterschiedlichen Betrachtungswinkeln widergegeben ist, sind die Trägerelemente 4 in einem Innenbereich des Fahrzeugunterbodens positioniert. In dieser Stellung weisen die Hubvorrichtungen 3 einen minimalen Abstand zueinander auf. Darüber hinaus sind die Hubvorrichtungen 3 in der Stellung entsprechend den Figuren 4 und 5 auf eine minimale Höhe eingefahren, so daß beispielsweise, so daß das Fahrzeug 5 für Arbeiten wie Scheibenkleben, Türeinbau, Cockpiteinbau oder Sitzeinbau gut zugänglich ist.

Bei einer weiteren Stellung von Hubvorrichtungen 3 und Trägerelementen 4 sind die Hubvorrichtungen entsprechend Figur 6 auf unterschiedliche Höhen ausgefahren, und von den Trägerelementen 4 ist eins in den Außenbereich und eins in den Innenbereich des Fahrzeugunterbodens geschwenkt. Hierdurch ist das Fahrzeug 5 um seine Längsachse kippbar, wodurch ein ergonomischer Zugang zum Fahrzeugunterboden ermöglicht wird. Dabei passen sich die Trägerelemente 4 an die um die Längsachse gekippte Karosserie an.

Neben den in Figuren dargestellten Stellungen von Hubvorrichtungen 3 und Trägerelementen 4 sind noch weitere Stellungen möglich, ohne daß in einer Fahrzeugmontagehalle platzbeanspruchenden Trägerkonstruktionen für Hängeförderer erforderlich sind. Damit ist keine Lasteinleitung in eine Oberkonstruktion der Fahrzeugmontagehalle erforderlich, die außerdem vergleichweise niedrig gestaltet sein kann. Darüber hinaus resultiert aus einer reduzierten Anlagenkomplexität infolge eines einheitlichen, durchgängig realisierten Fördertechnikkonzepts eine hohe Anlagenverfügbarkeit. Außerdem läßt sich ein einheitliches Fördertechnikkonzept in einem modularen Aufbau realisieren. Dies ermöglicht eine einfache und schnelle Fertigungsanlagenprojektierung, die zudem einfach an neue Aufgabenstellungen angepaßt werden kann. Hierdurch kann eine Fahrzeugmontageeinrichtung deutlich kostengünstiger realisiert werden. Ferner kann eine frühzeitige Festlegung auf Montageinhalte einzelner Arbeitsstationen vermieden werden.

Da mit dem vorliegenden Fördertechnikkonzept in den Arbeitsstationen Relativbewegung zwischen Fördermittel und Arbeitern sowie ein Herabfallen von Fahrzeug- oder Montageteilen aus größeren Höhen im Gegensatz insbesondere zur Hängefördertechnik vermieden werden können, ist im Vergleich zu herkömmlichen Fördertechnikkonzepten ein höheres Sicherheitsniveau erreichbar.

Die Anwendung der vorliegenden Erfindung ist nicht auf das beschriebene Ausführungsbeispiel beschränkt.

## Patentansprüche

1. Transportvorrichtung für eine Fahrzeugmontageeinrichtung mit
- einem auf einer Transportebene verfahrbaren Grundelement (1), wobei das auf der Transportebene verfahrbare Grundelement (1) ein ferngesteuert lenkbares oder schienengeführtes Fahrzeug ist,
- zumindest zwei mit dem Grundelement (1) verbundenen Sockelelementen (2), die jeweils um eine zur Transportebene senkrechte Drehachse drehbar und jeweils mit einer Hubvorrichtung (3) verbunden sind,
- zumindest jeweils einem mit einer Hubvorrichtung (3) verbundenen Trägerelement (4) zur Fahrzeugkarosserieaufnahme, das exzentrisch zur Drehachse des Sockelelements (2) bewegbar ist, wobei die Trägerelemente (4) mittels der Hubvorrichtungen (3) parallel zu den Drehachsen der Sockelelemente (2) beweglich sind,
**dadurch gekennzeichnet, daß**
- das Grundelement (1) in Längsrichtung teilbar ist und zwei miteinander lösbar verbindbare Grundmodule (11, 12) umfaßt, mit denen jeweils ein Sockelelement (2) verbunden ist,
- zwischen einem Trägerelement (4) und einer Hubvorrichtung (3) jeweils mindestens ein Drehgelenk (13) angeordnet ist, durch das ein Trägerelement (4) an einer jeweiligen Hubvorrichtung (3) drehbar gelagert ist.

2. Transportvorrichtung nach Anspruch 1,
bei der die Grundmodule (11, 12) mittels einer Steckverbindungsvorrichtung (14) miteinander verbindbar sind.

3. Transportvorrichtung nach einem der Ansprüche 1 oder 2,
bei der die Grundmodule (11, 12) mittels eines Querverschiebewagens oder einer Rollen-, Ketten-, Zahnriemen- und/oder Zahnstangenantriebsvorrichtung (15) voneinander trennbar sind.

4. Transportvorrichtung nach Anspruch 3,
bei der der Querverschiebewagen oder die Rollen-, Ketten-, Zahnriemen- und/oder Zahnstangenantriebsvorrichtung (15) an einer Bearbeitungsstation stationär angeordnet ist.

5. Transportvorrichtung nach einem der Ansprüche 1 bis 4,
bei der die Grundmodule (11, 12) in einem voneinander getrennten Zustand mittels einer Rollen-, Ketten-, Zahnriemen-und/oder Zahnstangenantriebsvorrichtung (15) und/oder elektrisch miteinander in Fahrtrichtung synchronisiert sind.

6. Transportvorrichtung nach einem der Ansprüche 1 bis 5,
bei der die Hubvorrichtungen (3) jeweils einen Teleskopmechanismus umfassen, und bei der jeder Teleskopmechanismus individuell ausfahrbar ist.

7. Transportvorrichtung nach einem der Ansprüche 1 bis 6,
bei der die Sockelelemente (2) am Grundelement (1) gelagert sind, und bei der die Sockelelemente (2) einen kreisförmigen Querschnitt aufweisen, und bei der die Drehachsen der Sockelelemente (2) jeweils mittig durch die Sockelelemente (2) verlaufen, und bei der die Hubvorrichtungen (3) jeweils außermittig auf einem Sockelelement (3) befestigt sind.

8. Transportvorrichtung nach einem der Ansprüche 1 bis 7,
bei der die Sockelelemente (2) in Längs- und/oder Querrichtung des Grundelements (1) auf dem Grundelement (1) verschiebbar sind.

9. Transportvorrichtung nach einem der Ansprüche 1 bis 8,
bei der die Trägerelemente (4) austauschbar sind.

10. Transportvorrichtung nach einem der Ansprüche 1 bis 9,
bei der die Trägerelemente (4) an eine um eine Fahrzeuglängsachse gekippte Karosserie anpaßbar ausgestaltet sind.

11. Transportvorrichtung nach einem der Ansprüche 1 bis 10,
bei der zwischen beiden Grundmodulen (11, 12) eine Steckverbindungsvorrichtung zur Übertragung von Steuerungssignalen vorgesehen ist.

12. Transportvorrichtung nach einem der Ansprüche 1 bis 11,
bei der die Grundmodule (11, 12) jeweils als Glieder einer kurvengängigen Kette aus Grundmodulen ausgestaltet sind.

13. Transportvorrichtung nach Anspruch 12,
bei der die Glieder der kurvengängigen Kette mittels lösbarer Kupplungselemente miteinander verbunden sind.

14. Transportvorrichtung nach einem der Ansprüche 1 bis 13,
bei der die Hubvorrichtungen (3) und/oder Trägerelemente (4) als Los-/Festlageranordnung ausgestaltet sind.

15. Transportvorrichtung nach einem der Ansprüche 1 bis 14,
bei der die Grundmodule (11, 12) durch eine mitgeführte Antriebseinheit und/oder durch zumindest eine stationär angeordnete Antriebseinheit verriegelbar sind.

16. Transportvorrichtung nach einem der Ansprüche 1 bis 15,
bei der die Grundmodule (11, 12) mittels stationär angeordneter Separierungselemente, insbesondere Kulissen, trennbar sind.

17. Transportvorrichtung nach einem der Ansprüche 1 bis 16,
bei der die Trägerelemente (4) durch eine mitgeführte Antriebseinheit und/oder durch zumindest eine stationär angeordnete Antriebseinheit schwenkbar sind.

18. Transportvorrichtung nach einem der Ansprüche 1 bis 17,
bei der die Hubvorrichtungen (3) eine mitgeführte Hubantriebseinheit und/oder stationäre Hubelemente, insbesondere Kulissen, umfassen.

19. Transportvorrichtung nach einem der Ansprüche 1 bis 18,
bei der die Hubvorrichtungen (3) zumindest eine durch stationäre Sicherungselemente, insbesondere Kulissen, gebildete Absturzsicherung umfassen.
